# EUROPEAN PATENT SPECIFICATION

(11) **EP 0 419 259 B1**
(45) Date of publication and mention of the grant of the patent: **24.04.1996**
(21) Application number: 90310300.0
(22) Date of filing: 20.09.1990
(51) Int. Cl.: G06K 9/68

(54) **Accurate recognition of input patterns**
Genaue Erkennung von Eingabemustern
Reconnaissance exacte de modèles d'entrée

(30) Priority: 20.09.1989 JP 244100/89
(43) Date of publication of application: 27.03.1991
(73) Proprietor: NEC CORPORATION, Tokyo (JP)
(72) Inventor: Murai, Yasumasa, NEC Corporation, Minato-ku, Tokyo (JP); Yamauchi, Toshifumi, NEC Corporation, Minato-ku, Tokyo (JP)
(74) Representative: Abnett, Richard Charles

(56) References cited:
- US-A- 4 610 025
- NEUEUS AUS DER TECHNIK vol. 1, no. 2, 1 April 1975, WUERZBURG pages 3 - 4 'Verfahren zum Erkennen von Schriftzeichen'
- PATTERN RECOGNITION LETTERS vol. 3, no. 6, December 1985, AMSTERDAM pages 431 - 436 P. S. WANG 'A new character recognition scheme with lower ambiguity and higher recognizability'

## Description

This invention relates to pattern recognition.

By way of illustration, the invention will be described in relation to the recognition of handwritten patterns; in particular the patterns may represent characters, such as the numerals 0 to 9. However, the invention is not limited thereto.

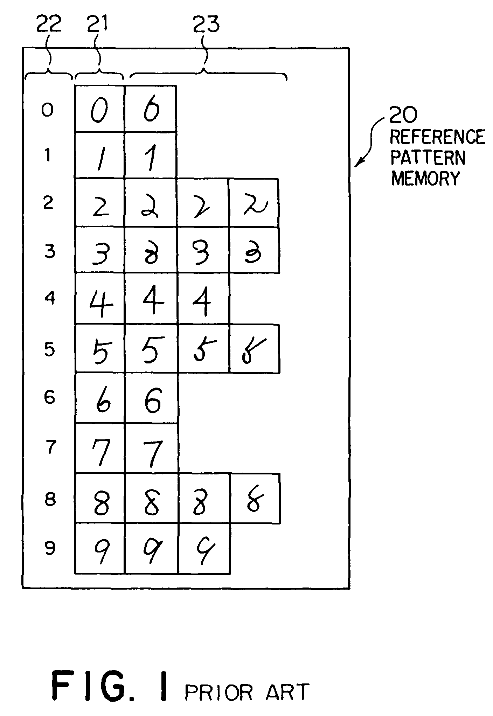

The operation of a first known pattern recognition device is illustrated in Figure 1 of the drawings. Referring to this figure, the character recognition device comprises a reference pattern memory 20, which is typically a character dictionary memory, and contains a plurality of basic reference character patterns 21, and a plurality of memorized (stored) identifiers 22 identifying the basic reference character patterns 21. The reference pattern memory 20 also holds a plurality of additional or modified reference character patterns 23 corresponding to the memorized identifiers 22. The input patterns are input character patterns representative of at least one of the numerals 0 to 9, with repetition allowed.

When supplied with the input pattern signal representative of a series of input character patterns, this first known character recognition device compares each of the input character patterns with each of the basic and the additional reference character patterns 21 and 23, and searches for that particular one of the basic and the additional reference character patterns 21 and 23 which has the lowest dissimilarity (or largest similarity) with the input character pattern under consideration. The character recognition device thereby outputs that one of the memorized identifiers 22 which corresponds to the particular pattern located by the search.

It is, however, difficult to provide a reference pattern memory 20 which stores a large number of additional reference character patterns 23. This is because a large number of character pattern forms are possible for the same character pattern, even if only one person repeatedly writes the same character pattern on a document. It is in practice impossible to prepare the additional reference character patterns corresponding to this large number of character pattern forms. It is therefore difficult for the character recognition device to recognize each of the input character patterns accurately.

Referring again to Figure 1 and also to Figures 2 and 3, another, different character recognition device comprising a different reference pattern memory which contains only the basic reference character patterns 21 identified by the memorized identifiers 22 will now be described. That is, the different reference pattern memory does not store the additional reference character patterns 23. It will be assumed that a user writes a series of P input character patterns #l to #P on a document, as illustrated in Figure 3, where P represents a first positive integer which is greater than one. In the example being illustrated, the first integer is equal to eighteen. The eighteen input character patterns are depicted in three lines merely for convenience of illustration.

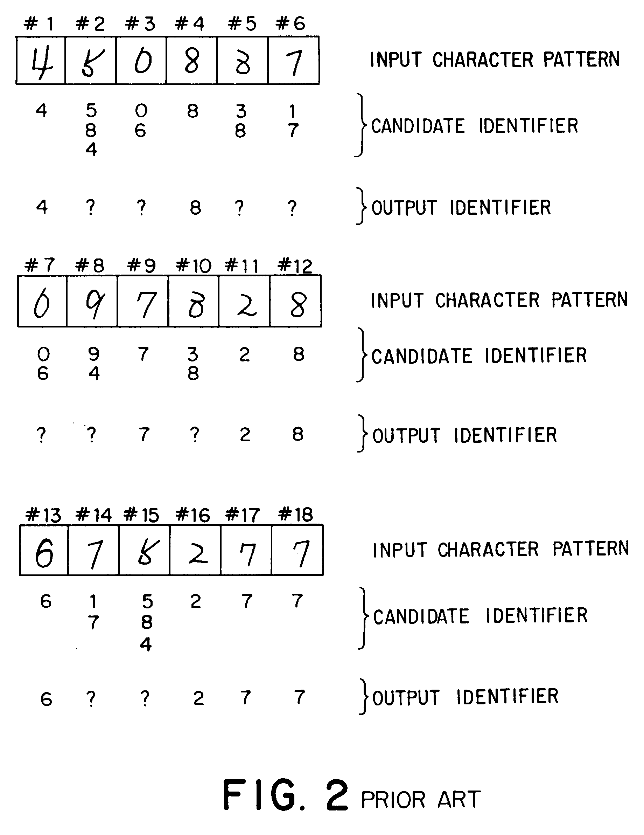

When supplied with an input pattern signal representative of these input character patterns, this second known character recognition device compares each of the input character patterns with each of the basic reference character patterns 21, and selects, as at least one selected pattern, at least one of the basic reference character patterns 21 which has a dissimilarity degree with the input character pattern in question which is less than a predetermined degree. The character recognition device thereby produces, as a candidate identifier, at least one of the memorized identifiers 22 which corresponds to the above-mentioned selected pattern or patterns. In this event, a single candidate identifier is not always produced for each of the input character patterns, as illustrated in Figure 2.

Referring more particularly to Figure 2, only one candidate identifier indicative of the memorized identifier 4 is produced for the first input character pattern #1. Likewise, only one candidate identifier is produced for each of the input character patterns #4, #9, #11, #12, #13, #16, #17, and #18. For the second input character pattern #2, three candidate identifiers indicative of the memorized identifiers 5, 8 and 4 are produced. Likewise, a plurality of candidate identifiers are produced for each of the input patterns #3, #5, #6, #7, #8, #10, #14 and #15.

When only one candidate identifier is produced for a particular one of the input character patterns, this known character recognition device produces that candidate identifier as the output identifier which identifies that particular one of the input character patterns. However, when a plurality of candidate identifiers are produced for one of the input character patterns, the device produces a rejection code indicating that the character recognition device aborts, namely, is incapable of recognizing that input character pattern. At any rate, this known character recognition device can not accurately recognize each of the input character patterns.

United States Patent US-A-4,610,025 describes a cryptographic analysis system which assigns provisional identifiers to unknown characters (glyphs), such that all substantially identical glyphs are represented by the same identifier. The identifiers are arranged in a sequence corresponding to the sequence in which the glyphs were received, and the identity of the glyphs is then further developed by means of general cryptographic techniques.

The present invention is defined in the independent claims below, to which reference should now be made. Advantageous features of the invention are set forth in the dependent claims.

The invention will now be described in more detail, by way of example, with reference to the drawings, in which:
Figure 1 (described above) is a diagram illustrating the operation of a reference pattern memory used in a first known pattern recognition device;
Figure 2 (described above) is a diagram illustrating the operation of a second known pattern recognition device;

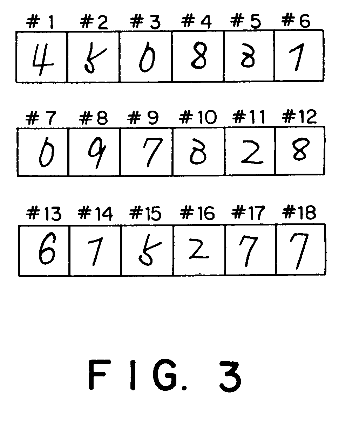

Figure 3 (referred to above) exemplifies a typical input pattern signal;

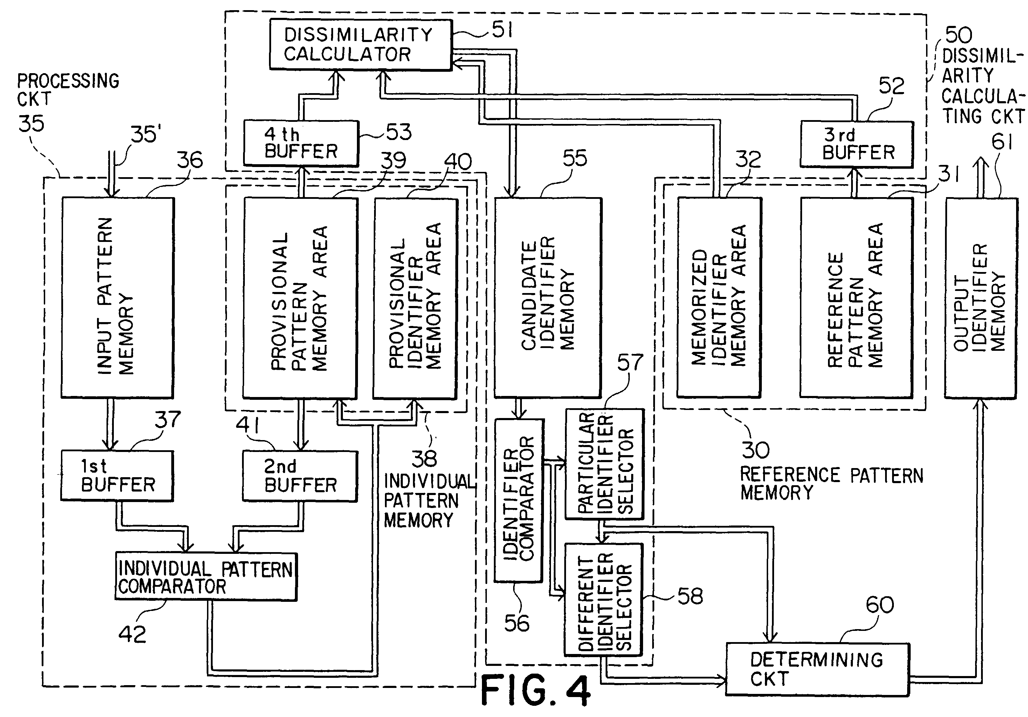

Figure 4 is a block diagram of a pattern recognition device embodying this invention; and

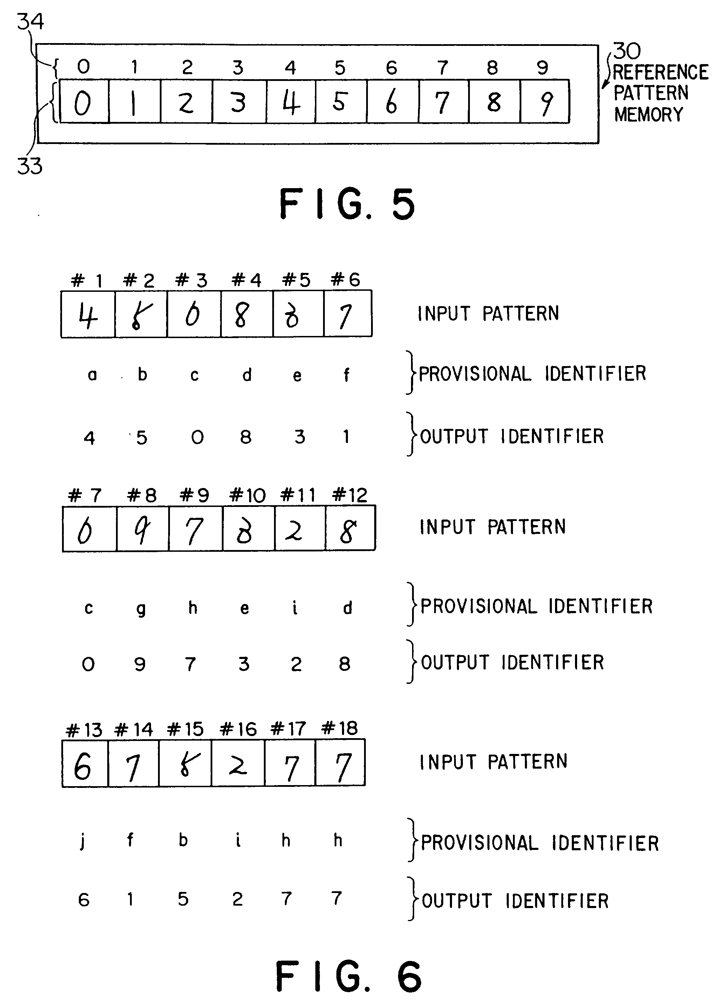

Figures 5, 6 and 7 are three diagrams illustrating the operation of the pattern recognition device shown in Figure 4.

Referring to Figures 4 and 5, a pattern recognition device for use in carrying out a method embodying this invention will now be described. The illustrated pattern recognition device is a character recognition device, and recognizes an input pattern signal representative of a series of P input character patterns (the first to the P-th input character patterns) by selecting P recognized patterns from a plurality of reference character patterns to produce a recognition result signal indicative of P output identifiers or true identifiers identifying the recognized patterns. In the present example there are eighteen input patterns and ten reference patterns; more generally P represents a first positive integer which is greater than one.

It should be noted here that the input character patterns and the reference character patterns are simply called input patterns and reference patterns, respectively.

The pattern recognition device comprises a reference pattern memory (namely, a character dictionary memory) 30 having a reference pattern memory area 31 and a memorized identifier memory area 32. The reference pattern memory area 31 contains the reference patterns. The memorized identifier memory area 32 holds the memorized identifiers which identify the reference patterns. The reference patterns 33 and the memorized identifiers 34 are illustrated in Figure 5. The reference patterns 33 are substantially equivalent to the basic reference character patterns 21 illustrated in Figure 1.

In Figure 4, a processing circuit 35 is supplied with the input pattern signal through an input connector 35'. In a manner which will be described in more detail below, the processing circuit 35 processes the series of P input patterns into Q provisional patterns (the first to the Q-th provisional patterns), where Q represents a second integer which is not greater than the above-mentioned plurality (ten, in this example).

The processing circuit 35 comprises an input pattern memory 36 which is supplied with the input pattern signal through the input connector 35'. The input pattern memory 36 stores the P input patterns as P memorized patterns, and successively produces the P stored patterns through a first buffer 37. It is presumed that the input pattern signal can readily be partitioned into the P individual input patterns. Thus, a combination of the input pattern memory 36 and the first buffer 37 serves as a pattern partitioning circuit, which is supplied with the input pattern signal, for partitioning the P input patterns into the individual input patterns.

An individual pattern memory 38 has a provisional pattern memory area 39, the contents of which can be successively updated in a manner which will shortly be described. The individual pattern memory 38 further has a provisional identifier memory area 40.

An individual pattern comparator 42 is connected directly to the first buffer 37, and to the provisional pattern memory area 39 of the individual pattern memory 38 through a second buffer 41. The individual pattern comparator 42 compares each of the individual input patterns with the current content of the provisional pattern memory area 39, and when the individual input pattern under consideration is not found in the current content, produces the individual input pattern under consideration as one of the Q provisional patterns. Preferably, the individual pattern comparator 42 also produces, when the individual input pattern under consideration is not found in the current content, a provisional identifier identifying the abovementioned one of the Q provisional patterns.

The individual pattern comparator 42 stores the above-mentioned one of the Q provisional patterns in the provisional pattern memory area 39 of the individual pattern memory 38, thereby renewing or updating the current content of the provisional pattern memory 39. The individual pattern comparator 42 also stores, in the provisional identifier memory area 40, the provisional identifier identifying the above-mentioned one of the Q provisional patterns. Thus, after the P input patterns have been processed by the pattern partitioning circuit (namely, the combination of the input pattern memory 36 and the first buffer 37) and by the individual pattern comparator 42, the provisional pattern memory area 39 of the individual pattern memory 38 holds the Q provisional patterns. Likewise, the provisional identifier memory area 40 of the individual pattern memory 38 will then hold the Q provisional identifiers which identify the Q provisional patterns.

Thus, the individual pattern comparator 42 stores, in the provisional pattern memory area 39 of the individual pattern memory 38, Q provisional patterns which are different from one another. The dissimilarity degree would be never equal to zero between even two character patterns which the same person writes many times for the same character. However, the dissimilarity degree between two character patterns which the same person writes many times for the same character, is less than that between two different character patterns which the same person writes for different characters. It is preferred that the individual pattern comparator 42 stores each of the individual input patterns as one of the Q provisional patterns whenever the distance indicative of the dissimilarity degree between the individual input pattern under consideration and each provisional pattern already stored in the provisional pattern memory area 39 as the current content is less than a preselected value. When this distance between the individual input pattern under consideration and a special provisional pattern already stored in the provisional pattern memory area 39 as the current content is not less than the preselected value, it is preferable that the individual pattern comparator 42 stores, instead of the special provisional pattern, a modified pattern which has a mean position between the individual input pattern under consideration and the special provisional pattern.

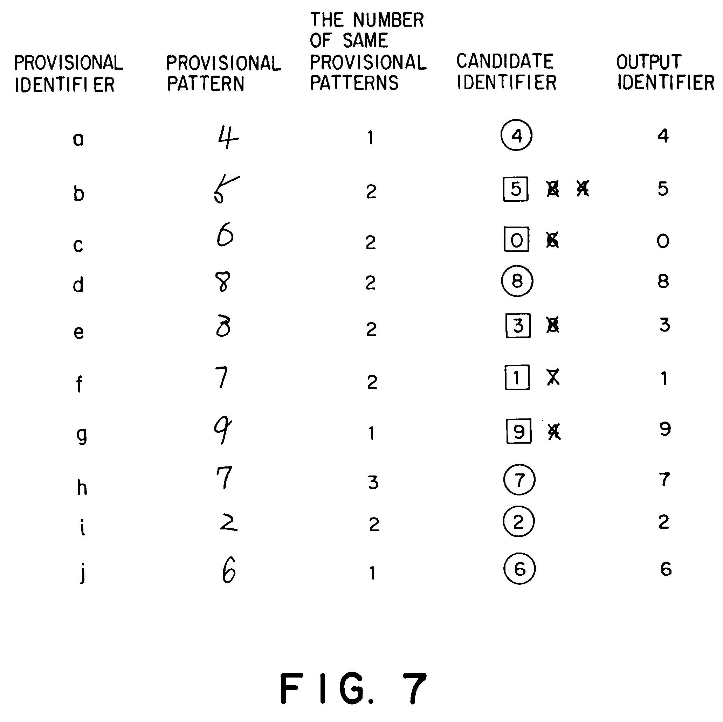

Referring again to Figure 4 and also to Figures 6 and 7, the Q provisional identifiers and the Q provisional patterns will be described in more detail. It is assumed in connection with Figure 4 that the pattern recognition device is supplied with an input pattern signal representative of the P input patterns illustrated in Figure 3. In the illustrated example, the P-th input pattern corresponds to the eighteenth input pattern #18.

In this case, the individual pattern comparator 42 produces the Q provisional identifiers a, b, c, d, e, f, g, h, i, and j as illustrated in Figure 6. In the example illustrated in Figure 6, the Q-th provisional identifier is the tenth provisional identifier. More specifically, the first to sixth provisional identifiers a, b, c, d, e, and f are produced for the first six input patterns #1 to #6, respectively. For the seventh input pattern #7, the third provisional identifier c is produced, because the seventh input pattern #7 is equivalent to the third input pattern #3. For the eight and ninth input patterns #8 and #9, the seventh and eight provisional identifiers g and h are produced, respectively. For the tenth input pattern #10, the fifth provisional identifier e is produced, because the tenth input pattern #10 is equivalent to the fifth input pattern #5. The ninth and the tenth provisional identifiers i and j are produced for the eleventh and thirteenth input patterns #11 and #13, respectively. For the twelfth and the fourteenth to the eighteenth input patterns #12, #14 #15, #16, #17, and #18, the fourth, the sixth, the second, the ninth, the eighth and the eighth, identifiers d, f, b, i, h, and h, are produced respectively.

The Q (ten) provisional patterns are illustrated in Figure 7 in correspondence to the Q (ten) provisional identifiers a, b, c, d, e, f, g, h, i and j. The number of occurrences of each of the P provisional patterns is also illustrated in Figure 7 in correspondence to the Q (ten) provisional identifiers.

Referring to Figures 4 and 7, a dissimilarity calculating circuit 50 is connected to the reference pattern and memorized identifier memory areas 31 and 32 of the reference pattern memory 30, and to the provisional pattern memory area 39 the individual pattern memory 38 of the processing circuit 35. The dissimilarity calculating circuit 50 calculates dissimilarity degrees (or similarity degrees) had by the reference patterns relative to the Q provisional patterns. The circuit 50 selects, with repetition allowed as selected patterns, the reference patterns which have dissimilarity degrees less than (or similarity degrees greater than) a predetermined degree. For example, the dissimilarity degrees are given by calculating the distance between each of the Q provisional patterns and each of the reference patterns, in a manner known in the art.

The dissimilarity calculating circuit 50 thereby selects from the memorized identifiers as candidate identifiers R particular identifiers and S different identifiers. Each of the R particular identifiers identifies only one pattern of the selected patterns. Each of the S different identifiers identifies one of at least two patterns of the selected patterns. The other at least one of the above-mentioned at least two patterns is identified by at least one of the R particular identifiers. It will be noted that R plus S is not greater than the first integer (P) and is not less than the second integer (Q).

When the pattern recognition device is supplied with an input pattern signal in Figure 3, representative of the input patterns of the type exemplified, the candidate identifiers are produced as illustrated in Figure 7. In Figure 7, at least one of the candidate identifiers is produced for each of the Q (ten) provisional patterns. More specifically, only one candidate identifier is produced for each of the provisional identifiers a, d, h, i, and j. Three candidate identifiers are produced for the provisional identifier b. Two candidate identifiers are produced for each of the provisional identifiers c, e, f, and g.

As described above, each of the R particular identifiers identifies only one pattern of the selected patterns. In Figure 7, each of the R particular identifiers is enclosed by a circle merely for convenience. In the illustrated example, the R particular identifiers identify the memorized identifiers (i.e. the numerals) 4, 8, 7, 2, and 6. As also mentioned above, each of the S different identifiers of the candidate identifiers identifies one of at least two patterns of the selected patterns. In Figure 7, each of the S different identifiers is enclosed for convenience by a rectangle. In the illustrated example, the S different identifiers identify the memorized identifiers 5, 0, 3, 1, and 9. The other one or ones of the above-mentioned at least two patterns is identified by at least one of the R particular identifiers as described above. In Figure 7, the above-mentioned at least one of the R particular identifiers has been crossed through by a symbol X for convenience of description and is not used as one of the P output identifiers. Thus, for example, for the provisional identifier b, the candidate identifier 8 has been crossed through because it is the particular identifier for the provisional identifier d, and the candidate identifier 4 has been crossed through because it is the particular identifier for the provisional identifier a. For the provisional identifier c, the candidate identifier 6 has been crossed through because it is the particular identifier for the provisional identifier j. When this operation is completed there is a single output identifier, derived from the R particular and S different identifiers, for each of the ten provisional identifiers a to j. The output identifiers are shown in the most right-hand column in Figure 7.

In Figure 4, the dissimilarity calculating circuit 50 comprises a dissimilarly calculator 51 connected to the reference pattern memory area 31 through a third buffer 52, to the provisional pattern memory area 39 through a fourth buffer 53, and to the memorized identifier memory area 32 directly. The dissimilarity calculator 51 calculates the dissimilarity degrees, so as to select the selected patterns and to select the candidate identifiers from the memorized identifiers. The candidate identifiers identify the selected patterns.

A candidate identifier memory 55 is connected to the output of the dissimilarity calculator 51. The candidate identifier memory 55 stores the candidate identifiers in correspondence to the Q provisional patterns.

An identifier comparator 56 is connected to the candidate identifier memory 55. The identifier comparator 56 compares the candidate identifiers with one another to check whether a single identifier or a combination of the candidate identifiers is stored in the candidate identifier memory 55 in correspondence to each of the Q provisional patterns.

A particular identifier selector 57 is connected to the identifier comparator 56. The particular identifier selector 57 selects, as each of the R particular identifiers the single identifiers which are enclosed by a circle in Figure 7.

A different identifier selector 58 is also connected to the identifier comparator 56 and to the particular identifier selector 57. The different identifier selector 58 selects, as each of the S different identifiers, the single identifier of the combination of identifiers which is different from the R particular identifiers. This single identifier is enclosed by a rectangle in Figure 7.

Thus, a combination of the identifier comparator 56, the particular identifier selector 57, and the different identifier selector 58 serves as a classifying circuit. The classifying circuit is connected to the candidate identifier memory 55 for classifying the candidate identifiers into the R particular identifiers and the S different identifiers.

A determining circuit 60 will now be described with reference to Figures 4, 6 and 7. Connected to the particular and the different identifier selectors 57 and 58 of the dissimilarity calculating circuit 50, the determining circuit 60 determines the P output identifiers which correspond to the P input patterns.

Connected to the determining circuit 60, an output identifier memory 61 stores the output identifiers.

When the pattern recognition device is supplied with an input pattern signal representative of the input patterns of the type exemplified in Figure 3, the output identifiers are determined in correspondence to the Q (ten) provisional patterns by using the R particular and the S different identifiers as illustrated at the most right-hand side in Figure 7. As a result, the P output identifiers are determined in correspondence to the P-th input patterns as illustrated in Figure 6.

It should be noted that the pattern recognition device aborts if R plus S exceeds the first integer. The pattern recognition device also aborts when R is not greater than a predetermined number, such as zero. In such an event, at least one of the series of P input patterns should be dealt with by using a rejection code, which may be visually displayed on a display unit together with the above-mentioned at least one of the P input patterns, and be processed like in the known character recognition device described above with reference to Figure 2.

In the illustrated pattern recognition system as described above, input patterns can be recognised accurately by using only basic reference patterns, without the need to store additional or modified reference patterns.

While this invention has thus far been described in conjunction with a single embodiment thereof, it will readily be possible for those skilled in the art to put this invention into practice in various other manners. For example, a modified pattern recognition device can use similarity degrees instead of the dissimilarity degrees used in the pattern recognition device illustrated in Figure 4. The modified pattern recognition device is equivalent to the pattern recognition device illustrated in Figure 4. In addition, the operation of the pattern recognition device illustrated in Figure 4 may be carried in a computer system which comprises either firmware or software which is programmed to execute the operation.

## Claims

1. A method of recognizing an input pattern signal representative of P input patterns by selecting P recognized patterns from a plurality of reference patterns to produce a recognition result signal indicative of P output identifiers identifying the P recognized patterns, where P represents a first integer which is greater than one, the method comprising the steps of:
storing a plurality of reference patterns and a plurality of memorized identifiers identifying the reference patterns;
processing the P input patterns into Q different provisional patterns, where Q represents a second integer which is not greater than the number of reference patterns, such that each input pattern is assigned exactly one provisional pattern and substantially identical input patterns are assigned the same provisional pattern;
calculating the degree of similarity or dissimilarity between the Q provisional patterns and the reference patterns to select the reference patterns which have dissimilarity degrees less than a predetermined degree as selected patterns, the calculating step thereby selecting a first plurality of particular identifiers and a second plurality of different identifiers, i.e. different from the particular identifiers, from the memorized identifiers corresponding to the selected reference patterns, each of the particular identifiers identifying only one of the selected reference patterns, i.e. without alternatives, and each of the different identifiers identifying one of at least two of the selected reference patterns, i.e. having alternatives, the remaining at least one of the said at least two of the selected reference patterns being identified by at least one of the particular identifiers; and
determining the P output identifiers by using the particular identifiers and the different identifiers.

2. A method as claimed in Claim 1, wherein the processing step comprises the steps of:
partitioning the P input patterns successively into individual input patterns;
memorizing the Q provisional patterns as stored provisional patterns; and
comparing each of the individual input patterns with the stored provisional patterns to include each of the individual input patterns as one of the Q provisional patterns when each of the individual input patterns is not currently one of the stored provisional patterns, the comparing step storing one of the Q provisional patterns to thereby update the stored provisional patterns;
the memorizing step comprising storing the Q provisional patterns after the P input patterns have been processed by the partitioning step and by the comparing step.

3. A method as claimed in Claim 1 or 2, wherein the calculating step comprises the steps of:
calculating the degrees of dissimilarity to select the selected reference patterns and to select candidate identifiers from the memorized identifiers, the candidate identifiers identifying the selected reference patterns;
memorizing the candidate identifiers in correspondence to the Q provisional patterns; and
classifying the candidate identifiers into particular identifiers and different identifiers based on the number of candidate identifiers corresponding to the Q provisional patterns.

4. A method as claimed in Claim 3, wherein the classifying step comprises the steps of:
comparing the candidate identifiers with one another to check whether a single identifier or a combination of the candidate identifiers is memorized in the candidate identifier memorizing step in correspondence to each of the Q provisional patterns;
selecting the single identifier as each of the particular identifiers; and
selecting, as each of the different identifiers, a sole identifier of the combination of identifiers that is different from the particular identifiers.

5. A method as claimed in Claim 3 or 4, wherein the determining step is for determining the particular identifiers and the different identifiers as the P output identifiers with reference to the Q provisional patterns.

6. A pattern recognition device for recognizing an input pattern signal representative of P input patterns by selecting P recognized patterns from a plurality of reference patterns to produce a recognition result signal indicative of P output identifiers identifying the P recognized patterns, where P represents a first integer which is greater than one, the pattern recognition device comprising:
a reference pattern memory for storing the reference patterns and a plurality of memorized identifiers identifying the reference patterns;
processing means for receiving the input pattern signal for processing the P input patterns into Q different provisional patterns, where Q represents a second integer which is not greater than the number of reference patterns, such that each input pattern is assigned exactly one provisional pattern and substantially identical input patterns are assigned the same provisional pattern;
calculating means connected to the reference pattern memory and the processing means for calculating the degree of similarity or dissimilarity between the Q provisional patterns and the reference patterns to select the reference patterns which have dissimilarity degrees less than a predetermined degree as selected patterns, the calculating means thereby selecting a first plurality of particular identifiers and a second plurality of different identifiers, i.e. different from the particular identifiers, from the memorized identifiers corresponding to the selected reference patterns, each of the particular identifiers identifying only one of the selected reference patterns, i.e. without alternatives, and each of the different identifiers identifying one of at least two of the selected reference patterns, i.e. having alternatives, the remaining at least one of the said at least two of the selected reference patterns being identified by at least one of the particular identifiers; and
determining means connected to the calculating means for determining the P output identifiers by using the particular identifiers and the different identifiers.

7. A pattern recognition device as claimed in Claim 6, wherein the processing means comprises:
pattern partitioning means for receiving the input pattern signal for partitioning the P input patterns successively into individual input patterns;
an individual pattern memory for memorizing the Q provisional patterns as stored provisional patterns; and
individual pattern comparing means connected to the pattern partitioning means and the individual pattern memory for comparing each of the individual input patterns with the stored provisional patterns to include each of the individual input patterns as one of the Q provisional patterns when each of the individual input patterns is not currently one of the stored provisional patterns, the individual pattern comparing means storing one of the Q provisional patterns in the individual pattern memory to thereby update the stored provisional patterns;
the individual pattern memory memorizing the Q provisional patterns after the P input patterns are processed by the pattern partitioning means and by the individual pattern comparing means.

8. A pattern recognition device as claimed in Claim 6 or 7, wherein the calculating means comprises:
a calculator connected to the reference pattern memory and the processing means for calculating the degrees of dissimilarity to select the selected reference patterns and to select candidate identifiers from the memorized identifiers, the candidate identifiers identifying the selected reference patterns;
a candidate identifier memory connected to the calculator for memorizing the candidate identifiers in correspondence to the Q provisional patterns; and
classifying means connected to the candidate identifier memory for classifying the candidate identifiers into particular identifiers and different identifiers based on the number of candidate identifiers corresponding to the provisional patterns.

9. A pattern recognition device as claimed in Claim 8, wherein the classifying means comprises:
an identifier comparator connected to the candidate identifier memory for comparing the candidate identifiers with one another to check whether a single identifier or a combination of candidate identifiers is memorized in the candidate identifier memory in correspondence to each of the Q provisional patterns;
a particular identifier selector connected to the identifier comparator for selecting the single identifier as each of the particular identifiers; and
a different identifier selector connected to the identifier comparator and the particular identifier selector for selecting, as each of the different identifiers, a sole identifier of the combination of identifiers that is different from the particular identifiers.

## Patentansprüche

1. Verfahren zum Erkennen eines Eingabemustersignals als Darstellung von P Eingabemustern durch Auswählen von P erkannten Mustern aus mehreren Referenzmustern, um ein Erkennungsergebnissignal als Anzeige von P Ausgabeidentifizierern zu erzeugen, die die P erkannten Muster identifizieren, worin P eine erste Ganzzahl darstellt, die größer als eins ist, wobei das Verfahren die folgenden Schritte aufweist:
Speichern mehrerer Referenzmuster und mehrerer gespeicherter Identifizierer, die die Referenzmuster identifizieren;
Verarbeiten der P Eingabemuster zu Q unterschiedlichen provisorischen Mustern, worin Q eine zweite Ganzzahl darstellt, die nicht größer als die Anzahl von Referenzmustern ist, so daß jedem Eingabemuster genau ein provisorisches Muster zugewiesen wird und im wesentlichen identischen Eingabemustern das gleiche provisorische Muster zugewiesen wird;
Berechnen des Grads der Ähnlichkeit oder Unähnlichkeit zwischen den Q provisorischen Mustern und den Referenzmustern, um die Referenzmuster, die Unähnlichkeitsgrade haben, die kleiner als ein vorbestimmter Grad sind, als ausgewählte Muster auszuwählen, wobei der Berechnungsschritt dadurch eine erste Mehrheit besonderer Identifizierer und eine zweite Mehrheit anderer, d. h., sich von den besonderen Identifizierern unterscheidender, Identifizierer aus den gespeicherten Identifizierern auswählt, die den ausgewählten Referenzmustern entsprechen, wobei jeder der besonderen Identifizierer nur eines der ausgewählten Referenzmuster identifiziert, d. h., ohne Alternativen, und jeder der anderen Identifizierer eines von mindestens zwei der ausgewählten Referenzmuster identifiziert, d. h., mit Alternativen, wobei das verbleibende mindestens eine der mindestens zwei der ausgewählten Referenzmuster durch mindestens einen der besonderen Identifizierer identifiziert wird; und
Bestimmen der P Ausgabeidentifizierer durch Verwenden der besonderen Identifizierer und der anderen Identifizierer.

2. Verfahren nach Anspruch 1, wobei der Verarbeitungsschritt die folgenden Schritte aufweist:
Aufteilen der P Eingabemuster nacheinander in Einzeleingabemuster;
Speichern der Q provisorischen Muster als gespeicherte provisorische Muster; und
Vergleichen jedes der Einzeleingabemuster mit den gespeicherten provisorischen Mustern, um jedes der Einzeleingabemuster als eines der Q provisorischen Muster aufzunehmen, wenn jedes der Einzeleingabemuster nicht aktuell eines der gespeicherten provisorischen Muster ist, wobei der Vergleichsschritt eines der Q provisorischen Muster speichert, um dadurch die gespeicherten provisorischen Muster zu aktualisieren;
wobei der Speicherungsschritt aufweist: Speichern der Q provisorischen Muster, nachdem die P Eingabemuster durch den Aufteilungsschritt und durch den Vergleichsschritt verarbeitet wurden.

3. Verfahren nach Anspruch 1 oder 2, wobei der Berechnungsschritt die folgenden Schritte aufweist:
Berechnen des Grads der Unähnlichkeit, um die ausgewählten Referenzmuster auszuwählen und um Kandidatenidentifizierer aus den gespeicherten Identifizierern auszuwählen, wobei die Kandidatenidentifizierer die ausgewählten Referenzmuster identifizieren;
Speichern der Kandidatenidentifizierer in Zuordnung zu den Q provisorischen Mustern; und
Klassifizieren der Kandidatenidentifizierer in besondere Identifizierer und andere Identifizierer auf der Grundlage der Anzahl von Kandidatenidentifizierern, die den Q provisorischen Mustern entsprechen.

4. Verfahren nach Anspruch 3, wobei der Klassifizierungsschritt die folgenden Schritte aufweist:
Vergleichen der Kandidatenidentifizierer miteinander, um zu prüfen, ob ein einzelner Identifizierer oder eine Kombination der Kandidatenidentifizierer in dem Speicherungsschritt der Kandidatenidentifizierer in Zuordnung zu jedem der Q provisorischen Muster gespeichert ist;
Auswählen des einzelnen Identifizierers als jeden der besonderen Identifizierer; und
Auswählen eines einzigen Identifizierers der Kombination von Identifizierern, der sich von den besonderen Identifizierern unterscheidet, als jeden der anderen Identifizierer.

5. Verfahren nach Anspruch 3 oder 4, wobei der Bestimmungsschritt zum Bestimmen der besonderen Identifizierer und der anderen Identifizierer als die P Ausgabeidentifizierer mit Bezug auf die Q provisorischen Muster dient.

6. Mustererkennungsvorrichtung zum Erkennen eines Eingabemustersignals als Darstellung von P Eingabemustern durch Auswählen von P erkannten Mustern aus mehreren Referenzmustern, um ein Erkennungsergebnissignal als Anzeige von P Ausgabeidentifizierern zu erzeugen, die die P erkannten Muster identifizieren, worin P eine erste Ganzzahl darstellt, die größer als eins ist, wobei die Mustererkennungsvorrichtung aufweist:
einen Referenzmusterspeicher zum Speichern der Referenzmuster und mehrerer gespeicherter Identifizierer, die die Referenzmuster identifizieren;
eine Verarbeitungseinrichtung zum Empfangen des Eingabemustersignals zum Verarbeiten der P Eingabemuster zu Q unterschiedlichen provisorischen Mustern, worin Q eine zweite Ganzzahl darstellt, die nicht größer als die Anzahl von Referenzmustern ist, so daß jedem Eingabemuster genau ein provisorisches Muster zugewiesen wird und im wesentlichen identischen Eingabemustern das gleiche provisorische Muster zugewiesen wird;
eine mit dem Referenzmusterspeicher und der Verarbeitungseinrichtung verbundene Berechnungseinrichtung zum Berechnen des Grads der Ähnlichkeit oder Unähnlichkeit zwischen den Q provisorischen Mustern und den Referenzmustern, um die Referenzmuster, die Unähnlichkeitsgrade haben, die kleiner als ein vorbestimmter Grad sind, als ausgewählte Muster auszuwählen, wobei die Berechnungseinrichtung dadurch eine erste Mehrheit besonderer Identifizierer und eine zweite Mehrheit anderer, d. h., sich von den besonderen Identifizierern unterscheidender, Identifizierer aus den gespeicherten Identifizierern auswählt, die den ausgewählten Referenzmustern entsprechen, wobei jeder der besonderen Identifizierer nur eines der ausgewählten Referenzmuster identifiziert, d. h., ohne Alternativen, und jeder der anderen Identifizierer eines von mindestens zwei der ausgewählten Referenzmuster identifiziert, d. h., mit Alternativen, wobei das verbleibende mindestens eine der mindestens zwei der ausgewählten Referenzmuster durch mindestens einen der besonderen Identifizierer identifiziert wird; und
eine mit der Berechnungseinrichtung verbundene Bestimmungseinrichtung zum Bestimmen der P Ausgabeidentifizierer durch Verwenden der besonderen Identifizierer und der anderen Identifizierer.

7. Mustererkennungsvorrichtung nach Anspruch 6, wobei die Verarbeitungseinrichtung aufweist:
eine Musteraufteilungseinrichtung zum Empfangen des Eingabemustersignals zum Aufteilen der P Eingabemuster nacheinander in Einzeleingabemuster;
einen Einzelmusterspeicher zum Speichern der Q provisorischen Muster als gespeicherte provisorische Muster; und
eine mit der Musteraufteilungseinrichtung und dem Einzelmusterspeicher verbundene Einzelmuster-Vergleichseinrichtung zum Vergleichen jedes der Einzeleingabemuster mit den gespeicherten provisorischen Mustern, um jedes der Einzeleingabemuster als eines der Q provisorischen Muster aufzunehmen, wenn jedes der Einzeleingabemuster nicht aktuell eines der gespeicherten provisorischen Muster ist, wobei die Einzelmuster-Vergleichseinrichtung eines der Q provisorischen Muster in dem Einzelmusterspeicher speichert, um dadurch die gespeicherten provisorischen Muster zu aktualisieren;
wobei der Einzelmusterspeicher die Q provisorischen Muster speichert, nachdem die P Eingabemuster durch die Musteraufteilungseinrichtung und durch die Einzelmuster-Vergleichseinrichtung bearbeitet sind.

8. Mustererkennungsvorrichtung nach Anspruch 6 oder 7, wobei die Berechnungseinrichtung aufweist:
einen mit dem Referenzmusterspeicher und der Verarbeitungseinrichtung verbundenen Rechner zum Berechnen des Grads der Unähnlichkeit, um die ausgewählten Referenzmuster auszuwählen und um Kandidatenidentifizierer aus den gespeicherten Identifizierern auszuwählen, wobei die Kandidatenidentifizierer die ausgewählten Referenzmuster identifizieren;
einen mit dem Rechner verbundenen Kandidatenidentifiziererspeicher zum Speichern der Kandidatenidentifizierer in Zuordnung zu den Q provisorischen Mustern; und
eine mit dem Kandidatenidentifiziererspeicher verbundene Klassifizierungseinrichtung zum Klassifizieren der Kandidatenidentifizierer in besondere Identifizierer und andere Identifizierer auf der Grundlage der Anzahl von Kandidatenidentifizierern, die den provisorischen Mustern entsprechen.

9. Mustererkennungsvorrichtung nach Anspruch 8, wobei die Klassifizierungseinrichtung aufweist:
einen mit dem Kandidatenidentifiziererspeicher verbundenen Identifizierervergleicher zum Vergleichen der Kandidatenidentifizierer miteinander, um zu prüfen, ob ein einzelner Identifizierer oder eine Kombination der Kandidatenidentifizierer in dem Kandidatenidentifiziererspeicher in Zuordnung zu jedem der Q provisorischen Muster gespeichert ist;
einen mit dem Identifizierervergleicher verbundenen Wähler für besondere Identifizierer zum Auswählen des einzelnen Identifizierers als jeden der besonderen Identifizierer; und
einen mit dem Identifizierervergleicher und dem Wähler für besondere Identifizierer verbundenen Wähler für andere Identifizierer zum Auswählen eines einzigen Identifizierers der Kombination von Identifizierern, der sich von den besonderen Identifizierern unterscheidet, als jeden der anderen Identifizierer.

## Revendications

1. Méthode de reconnaissance d'un signal de modèles d'entrée représentatifs de P modèles d'entrée en sélectionnant P modèles reconnus à partir d'une pluralité de modèles de référence pour élaborer un signal de résultat de reconnaissance indicatif de P identificateurs de sortie identifiant les P modèles reconnus, P représentant un premier nombre entier qui est supérieur à un, la méthode comprenant les étapes consistant à:
stocker une pluralité de modèles de référence et une pluralité d'identificateurs mémorisés identifiant les modèles de référence;
traiter les P modèles d'entrée en Q modèles provisoires différents, Q représentant un second nombre entier qui n'est pas supérieur au nombre de modèles de référence, de manière à ce qu'il soit attribué à chaque modèle d'entrée exactement un modèle provisoire et à ce que soit attribué à des modèles d'entrées substantiellement identiques le même modèle provisoire;
calculer le degré de ressemblance ou de dissemblance entre les Q modèles provisoires et les modèles de référence pour sélectionner les modèles de référence qui présentent des degrés de dissemblance inférieurs à un degré prédéterminé en tant que modèles sélectionnés, l'étape de calcul sélectionnant ainsi une première pluralité d'identificateurs particuliers et une seconde pluralité d'identificateurs différents, c'est-à-dire différents des identificateurs particuliers, à partir des identificateurs mémorisés correspondant aux modèles de référence sélectionnés, chacun des identificateurs particuliers identifiant uniquement un des modèles de référence sélectionnés, c'est-à-dire sans alternatives, et chacun des différents identificateurs identifiant un d'au moins deux modèles de référence sélectionnés, c'est-à-dire comportant des alternatives, celui restant au moins au nombre de un desdits au moins deux modèles de référence sélectionnés étant identifié par au moins un des identificateurs particuliers ; et
déterminer les P identificateurs de sortie en utilisant les identificateurs particuliers et les identificateurs différents.

2. Méthode selon la revendication 1, dans laquelle l'étape de traitement comporte les étapes consistant à:
subdiviser les P modèles d'entrée successivement en modèles de sortie individuels;
mémoriser les Q modèles provisoires en tant que modèles provisoires stockés; et
comparer chacun des modèles d'entrée individuels avec les modèles provisoires stockés pour inclure chacun des modèles d'entrée individuels en tant qu'un des Q modèles provisoires lorsque chacun des modèles d'entrée individuels n'est pas au moment considéré un des modèles provisoires stockés, l'étape de comparaison stockant un des Q modèles provisoires pour réactualiser ainsi les modèles provisoires stockés;
l'étape de mise en mémoire consistant à stocker les Q modèles provisoires après que les P modèles d'entrée aient été traités par l'étape de subdivision et par l'étape de comparaison.

3. Méthode selon la revendication 1 ou 2, dans laquelle l'étape de calcul comporte les étapes consistant à:
calculer les degrés de dissemblance pour sélectionner les modèles de référence sélectionnés des identificateurs de candidats à partir des identificateurs mémorisés, les identificateurs de candidats identifiant les modèles de référence sélectionnés;
mettre en mémoire les identificateurs de candidats en correspondance avec les Q modèles provisoires; et
classer les identificateurs de candidats en identificateurs particuliers et en identificateurs différents sur la base du nombre d'identificateurs de candidats correspondant aux Q modèles provisoires.

4. Méthode selon la revendication 3, dans laquelle l'étape de classification comporte les étapes consistant à:
comparer les identificateurs de candidats les uns aux autres pour déterminer si un identificateur unique ou une combinaison des identificateurs de candidats est mise en mémoire dans l'étape de mise en mémoire des identificateurs de candidats en correspondance avec chacun des Q modèles provisoires;
sélectionner l'identificateur unique en tant que chacun des identificateurs particuliers; et
sélectionner, en tant que chacun des identificateurs différents, un seul identificateur de la combinaison d'identificateurs qui soit différent des identificateurs particuliers.

5. Méthode selon la revendication 3 ou 4, dans laquelle l'étape de détermination consiste à déterminer les identificateurs particuliers et les identificateurs différents en tant que les P identificateurs de sortie en se référant aux Q modèles provisoires.

6. Dispositif de reconnaissance de modèles pour reconnaître un signal de modèles d'entrée représentatifs de P modèles d'entrée en sélectionnant P modèles reconnus à partir d'une pluralité de modèles de référence pour élaborer un signal de résultat de reconnaissance indicatif de P identificateurs de sortie identifiant les P modèles reconnus, où P représente un premier nombre entier qui est supérieur à un, le dispositif de reconnaissance de modèles comprenant:
une mémoire de modèles de référence pour stocker les modèles de référence et une pluralité d'identificateurs mémorisés identifiant les modèles de référence;
des moyens de traitement pour recevoir le signal de modèle d'entrée pour traiter les P modèles d'entrée en Q modèles provisoires différents, où Q représente un second nombre entier qui n'est pas supérieur au nombre de modèles de référence, de manière à ce qu'il soit attribué à chaque modèle d'entrée exactement un modèle provisoire et à ce qu'il soit attribué à des modèles d'entrées substantiellement identiques le même modèle provisoire;
des moyens de calcul reliés à la mémoire des modèles de référence et aux moyens de traitement pour calculer le degré de ressemblance ou de dissemblance entre les Q modèles provisoires et les modèle de référence pour sélectionner les modèles de référence qui présentent des degrés de dissemblance inférieurs à un degré prédéterminé en tant que modèles sélectionnés, les moyens de calcul sélectionnant ainsi une première pluralité d'identificateurs particuliers et une seconde pluralité d'identificateurs différents, c'est-à-dire différents des identificateurs particuliers, à partir des identificateurs mémorisés correspondant aux modèles de référence sélectionnés, chacun des identificateurs particuliers identifiant uniquement un des modèles de référence sélectionnés, c'est-à-dire sans alternatives, et chacun des différents identificateurs identifiant un d'au moins deux modèles de référence sélectionnés, c'est-à-dire comportant des alternatives, celui restant au moins au nombre de un desdits au moins deux modèles de référence sélectionnés étant identifié par au moins un des identificateurs particuliers: et
des moyens de détermination reliés aux moyens de calcul pour déterminer les P identificateurs de sortie en utilisant les identificateurs particuliers et les identificateurs différents.

7. Dispositif de reconnaissance de modèles selon la revendication 6, dans lequel les moyens de traitement comprennent:
des moyens de subdivision de modèles destiné à recevoir le signal de modèles d'entrée pour subdiviser les P modèles d'entrée successivement en modèles d'entrée individuels;
une mémoire de modèles individuels pour mettre en mémoire les Q modèles provisoires en tant que modèles provisoires stockés; et
des moyens de comparaison de modèles individuels reliés aux moyens de subdivision des modèles et à la mémoire de stockage des modèles individuels pour comparer chacun des modèles d'entrée individuels avec les modèles provisoires stockés pour inclure chacun des modèles d'entrée individuels en tant qu'un des Q modèles provisoires, lorsque chacun des modèles d'entrée individuels n'est pas au moment considéré un des modèles provisoires stockés, les moyens de comparaison des modèles individuels stockant un des Q modèles provisoires dans la mémoire des modèles individuels pour réactualiser ainsi les modèles provisoires stockés;
la mémoire des modèles individuels mettant en mémoire les Q modèles provisoires après que les P modèles d'entrée aient été traités par les moyens de subdivision des modèles et par les moyens de comparaison des modèles individuels.

8. Dispositif de reconnaissance de modèle selon la revendication 6 ou 7, dans lequel les moyens de calcul comprennent:
un calculateur relié à la mémoire des modèles de référence et aux moyens de traitement pour calculer les degrés de dissemblance pour sélectionner les modèles de référence sélectionnés et pour sélectionner des identificateurs de candidats à partir des identificateurs mémorisés, les identificateurs de candidats identifiant les modèles de référence sélectionnés;
une mémoire d'identificateurs de candidats reliée au calculateur pour mémoriser les identificateurs de candidats en correspondance avec les Q modèles provisoires; et
des moyens de classement reliés à la mémoire des identificateurs de candidats pour classer les identificateurs de candidats en identificateurs particuliers et en identificateurs différents sur la base du nombre d'identificateurs de candidats correspondant aux modèles provisoires;

9. Dispositif de reconnaissance de modèles selon la revendication 8, dans lequel les moyens de classification comprennent:
un comparateur d'identificateurs relié à la mémoire des identificateurs de candidats pour comparer les identificateurs de candidats les uns avec les autres pour déterminer si un identificateur unique ou une combinaison d'identificateurs de candidats est mémorisé dans la mémoire des identificateurs de candidats en correspondance avec chacun des Q modèles provisoires;
un sélecteur d'identificateurs particuliers relié au comparateur d'identificateurs pour sélectionner l'identificateur unique en tant que chacun des identificateurs particuliers; et
un sélecteur d'identificateurs différents relié au comparateur d'identificateurs et au sélecteur d'identificateurs particuliers pour sélectionner , en tant que chacun des identificateurs différents, un identificateur unique de la combinaison d'identificateurs qui est différente des identificateurs particuliers.
